Europäisches Patentamt

European Patent Office

Office européen des brevets

(19)

(11) Veröffentlichungsnummer: **0 192 185**
**B1**

# (12) EUROPÄISCHE PATENTSCHRIFT

(45) Veröffentlichungstag der Patentschrift: 18.07.90

(21) Anmeldenummer: 86101799.4

(22) Anmeldetag: 13.02.86

(51) Int. Cl.⁵: **F 01 D 11/08**, F 01 D 5/08, F 01 D 25/08

(54) **Gasturbinenstrahltriebwerk für Flugzeuge mit gezielter Turbinenbauteilkühlung.**

(30) Priorität: 21.02.85 DE 3505975

(43) Veröffentlichungstag der Anmeldung:
27.08.86 Patentblatt 86/35

(45) Bekanntmachung des Hinweises auf die
Patenterteilung:
18.07.90 Patentblatt 90/29

(84) Benannte Vertragsstaaten:
BE DE FR GB IT NL

(56) Entgegenhaltungen:
FR-A-2 360 749
GB-A-2 015 085
GB-A-2 062 763
GB-A-2 136 508

MACHINE DESIGN, Band 52, Nr. 3, 7. Februar
1980, Seiten 88,89, Cleveland, Ohio, US;
"Controlled cooling boosts engine efficiency"

(73) Patentinhaber: MTU MOTOREN- UND
TURBINEN-UNION MÜNCHEN GMBH
Dachauer Strasse 665 Postfach 50 06 40
D-8000 München 50 (DE)

(72) Erfinder: Eidenschink, Hans
Prangerstrasse 7
D-8000 München 60 (DE)

Courier Press, Leamington Spa, England.

**Beschreibung**

Gasturbinenstrahltriebwerke für Flugzeuge verlangen die Abzapfung verhältnismäßig großer Luftmengen vorrangig aus dem Hochdruckverdichter zwecks Turbinen- bzw. Turbinenbauteilkühlung, um unter anderem die verlangten, verhältnismäßig hohen Turbineneintrittstemperaturen materialseitig beherrschen zu können sowie zwecks Erzielung möglichst homogener Bauteiltemperaturen in Bereichen, in denen normalerweise — also wenn keine gezielte Kühlung vorhanden wäre — vergleichsweise stark voneinander abweichende, betriebs- und konstruktionsbedingte Bauteiltemperaturgradienten auftreten würden, die z.B. zu unerwünschten Bauteildeformationen, z.B. des Turbinengehäuses wie gegebenenfalls aber auch zu unerwünscht harten Schaufelanstreifvorgängen oder Triebwerksschäden führen könnten.

Neben den genannten Kühlzwecken muß z.B. aus einem Hochdruckverdichter eines Gasturbinenstrahltriebwerkes Verdichterluft gegebenenfalls zu Sperrluftzwecken für Dichtungen und Triebwerkslager wie aber auch z.B. zwecks Enteisung, Kabinenbelüftung, Verdichterregelung (Abblasung) sowie triebwerks- oder flugzeugseitiger Grenzschichtbeeinflussung beigezogen werden.

Die genannten Verdichterluftentnahmen führen in der Regel zu verhältnismäßig großen Effektivitätsverlusten des aero-thermodynamischen Triebwerkskreisprozesses.

Die Praxis hat gezeigt, das ganz bestimmte Turbinenbauteile bzw. Turbinenstrukturbauteile, z.B. die Turbineninnengehäusepartien, insbesondere die Gehäusehaken als Stator deckband- oder -dichtungssegmentträger im Hinblick auf extreme Flug- und Triebwerkslastzustände, z.B. Start- und Steigflugphasen oder Manöverlasten, extrem empfindlich reagieren und demzufolge verhältnismäßig intensiv gekühlt werden müssen (kritische Bauteile bzw. Kühlung), was selbst dann meist nur unzureichend bewerkstelligbar ist, wenn von einer über den gesamten Betriebszustand vorhandenen Verdichterluftabzapfung zwecks Gehäuseinnenkühlung ausgegangen wird, wobei die zuletzt genannte Maßnahme wiederum einen nicht unbeachtlichen, über den gesamten Betriebszustand anhaltenden Effektivitätsverlust aus dem Triebwerkskreisprozeß nach sich ziehen würde. Dieser Mangel der zuletzt genannten Maßnahme erscheint um so gravierender, wenn man den diesbezüglichen Kreisprozeßeffektivitätsverlust in einem ursächlichen Zusammenhang mit den im allgemeinen jeweils zeitlich kurz zu durchfahrenden extremen Flug- und Triebwerkslastzuständen sieht.

Möglicherweise könnte zwar für eine einwandfreie Kühlung der unter den gegebenen Lastzuständen "kritischen" Turbinenbauteile und/oder -gehäuseinnenstrukturen die Verdichterluftentnahmemenge über den gesamten Betriebszustand erhöht werden. Diese Maßnahme stünde in noch extremeren Maße im Widerspruch zu den im allgemeinen relativ kurzzeitig zu durchfahrenden extremen Lastzuständen, zumal der Effektivität des Triebwerkskreisprozesses bzw. einer vertretbaren Wirtschaftlichkeit eines Gasturbinenstrahltriebwerkes Grenzen gesetzt sind; dies soll durch die eingangs gemachten Vorgaben verdeutlicht sein, wonach der Effektivität eines optimalen Triebwerkskreisprozesses nicht nur durch die Kühlluftentnahme, sondern zahlreiche anderweitige betriebsnotwendige Verdichterentnahmeluftmengen enge Grenzen gesetzt sind.

Bei einem aus der GB-A 20 62 763 bekannten Gasturbinentriebwerk geht es primär darum, ein spezielles Dichtungskonzept, z.B. an der zweiten Stufe einer Turbine (Leit-, Laufschaufeln) so auszubilden, daß trotz zunehmender Triebwerks- und Temperaturbelastung möglichst konstante und minimale Radialspalte zwischen einem linsenförmigen, labyrinthartigen rotierenden Teil und abgestuft zugeordneten Gegenflächen von Segmenten des stationären Teils der Dichtung aufrecht erhalten werden sollen. Im bekannten Fall soll ein Teil der über die eine Leitung am Verdichterende entnommenen Hochdruckluft zu Kühlung der Leitschaufeln dieser Turbine verwendet werden; ein übriger oder Restteil der zugeführten Hochdruckluft soll über fußseitige Schlitze der Turbinenleitschaufeln einer vorderen Dichtungskammer zugeführt werden, die ihrerseits wiederum von Heißgas-Dicht-Leckanteilen stromab der Laufschaufeln einer ersten Turbinenstufe beaufschlagt ist. Es soll dabei also unter Ausnutzung eines vorgegebenen Druckgefälles an der Dichtung -bzw. zwischen der vorderen und einer hinteren Kammermöglichst wenig Hochdruckluft verbraucht werden. Die vordere Kammer stellt im bekannten Fall eine Mischkammer dar, in der ein geeignetes Temperaturniveau aus Leckgas- und Hochdruckluftanteilen aufbereitet werden soll. Ferner sieht der vorliegende bekannte Fall Entnahmeleitungen für Verdichterluft mit Absperrventilen vor, die stromauf der betreffenden Einmündungsstellen der Leitungen in das Turbinengehäuse vorgesehen sind. Ferner soll eine Kombination der genannten Leitungen mit anderweitigen Entnahmeleitungen für Verdichterluft vorgesehen sein, um über fest einjustierte sogenannte "Restriktoren" stets unveränderte Mindestkühlluftmengen aufrechterhalten zu wollen.

Ferner sieht der bekannte Fall ausdrücklich besondere Steuereinrichtungen für die genannten Absperrventile vor, die somit über die Steuereinrichtungen als Funktion von Triebwerksparametern, z.B. der Verdichteraustrittstemperatur T oder als Funktion des Umgebungsdrucks P und der Verdichterdrehzahl N betätigt werden sollen. Eine rein "selbstregulierend" arbeitende bzw. selbsttätig differenzdruckgesteuerte Kühlluftzuteilung oder -absperrung, ohne auf besondere z.B. elektronische Steuereinrichtungen oder dergleichen angewiesen zu sein, ist dem bekannten Fall nicht entnehmbar.

Ein aus der GB-A 20 15 085 bekanntes Kühlluft-Steuerventil für ein Gasturbinentriebwerk weist einen membranartig ausgebildeten Ventilkörper und eine diesem zugeordnete, rückwärtige Druck-Kammer auf. Über einen triebwerksinternen Ringraum, der über Öffnungen an einen Sekundärluftkanal der Brennkammer angeschlossen ist, soll einerseits die rückwärtige Druck-Kammer mittels in der Membran enthaltener Öffnungen an die Luftzufuhr so angeschlossen sein, daß im Normalfall (Marschflugbetrieb) ein Ventilkörper der Membran abdichtend an einer Gegenfläche aufsitzt. Im Marschflugbetrieb soll über schon genannten Ringraum sowie weitere Öffnungen, die in einer die Ventilgegenfläche enthaltenden Wand angeordnet sind, stets eine Mindestkühlluftmenge den betreffenden Laufschaufeln einer Hochdruckturbine zuführbar sein. Erst im Wege eines thermisch (Infrarotabtastung der Laufschaufeln)/mechanisch (weiteres Ventil) gesteuerten Druckabfalles in der rückwärtigen Druck-Kammer gegenüber der Atmosphäre kann dieses Kühlluft-Steuerventil mehr oder weniger geöffnet (moduliert) werden, um gemäß der gemessenen Temperaturerhöhung an den Laufschaufeln eine entsprechend erhöhte Kühlluftzufuhr zu besorgen.

Der Erfindung liegt die Aufgabe zugrunde, ein Gasturbinenstrahltriebwerk gemäß Oberbegriff des Patentanspruchs 1 anzugeben, welches zur optimalen Kühlung der unter extremen Flugzuständen und Triebwerkslastzuständen "kritischen" Turbinenbauteile, insbesondere der Turbineninnengehäusestruktur, nur einen verhältnismäßig geringen Effektivitätsverlust aus dem aero-thermodynamischen Kreisprozeß nach sich zieht.

Die gestellte Aufgabe ist gemäß Patentanspruch 1 erfindungsgemäß gelöst. Die angegebene Lösung ermöglicht einen verhältnismäßig einfachen, robusten und sehr betriebssicheren Aufbau und, sie läßt sich gegebenenfalls ohne nennenswerte Komplikationen in ein vorhandenes Gasturbinenstrahltriebwerk integrieren.

Es ist also möglich, die zusätzliche Kühlluft nur während der "kritischen" Flugphase bzw. -phasen zuzuschalten. Diese zusätzliche Kühlluftmenge von z.B. +0,2 bis 0,3% W2 (W2 = Verdichtereintrittsdurchsatz) würde demnach nur während der Start- und Steigflugphase über einen Zeitraum von etwa zwei Minuten anfallen und somit als Leistungsverlust kaum ins Gewicht fallen.

Mit anderen Worten gelingt es, die bei herkömmlichen Triebwerkskonzeptionen vorhandene kontinuierliche Gehäuseinnenkühlung stark zu reduzieren, da die Kühlluft in erster Linie nur während der Start- und Steigflugphase benötigt wird, während sie in der übrigen Zeit, also z.B. im Reiseflug (CRUISE), hauptsächlich einen Leistungsverlust darstellt.

Da im allgemeinen der Abstand in der Druckdifferenz zwischen dem Triebwerksauslegungspunkt (ADP) und z.B. dem "kritischen" Startfall (T.0.) sehr groß ist, muß an das Schaltverhalten des Ventils keine hohen Anforderungen gestellt werden. Die zusätzliche Kühlluftmenge kann also durch einen gegebenenfalls austauschbaren Restriktor, z.B. im Anschlußflansch, eingestellt werden. Die Fehlerfälle: "Ventil stets offen/ Ventil stets geschlossen" werden für die Flugsicherheit als vollkommen unproblematisch angesehen.

Je nach Auslegung und Einsatzbeschaffenheit eines Gasturbinentriebwerkes wäre es im Rahmen der angegebenen Lösung durchaus möglich, auf eine stets vorhandene, z.B. kontinuierliche und reduzierte Gehäuseinnenkühlung wegen eines insgesamt niedrigen Temperaturniveaus im Turbinenbereich gänzlich zu verzichten, so daß ausschließlich für die genannten "kritischen" Flug- und Kühlphasen die erforderliche Kühlluftmenge für eine Zeitdauer von etwa zwei Minuten bereitgestellt werden muß. Die Effektivitätsverluste aus dem aero-thermodynamischen Triebwerkskreisprozeß wären hierbei also noch wesentlich niedriger zu veranschlagen als dies bei der zuvor genannten Variante der Fall wäre, die von einer stets vorhandenen kontinuierlichen, aber schon reduzierten Gehäuseinnenkühlung unter Einschluß der bedarfsweisen zusätzlichen Kühlluftmengenbereitstellung für die genannten "kritischen" Fälle ausgeht.

Von besonderer Effektivität ist die Lehre nach Anspruch 1 weiter dadurch, daß die im "kritischen" Temperaturbereich liegenden Turbinen- bzw. Turbinengehäusestrukturbauteile unmittelbar, also örtlich gezielt und nicht auf die Kühleffektivität vermindernden, verlustreichen Umwegen kühlbar sind.

In weiterer Ausgestaltung des Erfindungsgegenstandes (Anspruch 2) wird von einer an sich bekannten Gasturbinenstrahltriebwerksanlage für Flugzeuge ausgegangen, die mit einer Turbinenlaufschaufelspaltsteuereinrichtung (Active Clearance Control, kurz ACC genannt) ausgerüstet ist. Ein derartiges Gasturbinenstrahltriebwerk ist z.B. aus der US-A-4,019,320 bekannt.

Die bei einem derartigen Gasturbinenstrahltriebwerk gemäß Patentanspruch 2 vorzusehende Ausbildung ermöglicht einer derartige Koordinierung des Schaltzyklus der zusätzlichen Turbinengehäuseinnenkühlung mit dem Schaltzyklus der ACC, daß bei vergleichsweise niedriger, aber ausreichender Schaltdruckdifferenz Leistungseinsparungen über den weitaus größten Teil der Flugmission möglich sind, ohne daß es im Wege der Verwendung der allgemein bekannten ACC, als Ursache der dabei von Anfang an bei starken Beschleunigungsphasen (Start-Steigflug) zugeschalteten ACC-Luft, zu unzulässig starken Schaufelanstreifvorgängen kommen kann.

Im Wege der angegebenen Koordinierung nach Anspruch 2 kann vor allem auch während des Schubumkehrbetriebs oder beim Durchstarten im Landeanflug die Innengehäusekühlluftversorgung weitestgehend unterdrückt und somit ein verhältnismäßig starker Laufschaufelspitzendichtungseinlauf vermieden werden.

Vorteilhafte Ausgestaltungen des Erfindungsgegenstandes gehen aus den Patentansprüchen 3 bis 7 hervor; anhand der Zeichnungen ist die Erfindung beispielsweise weiter erläutert; es zeigen:

Fig. 1 eine schamatisch wiedergegebene obere Längsschnitthälfte eines Gasturbinenstrahltriebwerks mit Ventil-Leitungs-Anordnung zwischen Hochdruckverdichter und Gehäuse der Niederdruckturbine, hier zwecks ausschließlicher Kühlluftzufuhr im Extremlastfall (Startphase, Steigflugphase),

Fig. 2 eine gegenüber Fig. 1 für die "kritische" Bauteilkühlung in Einzelheiten detaillierter wiedergegebene Ventil-Leitungsanordnung unter zusätzlichem Einschluß einer stets vorhandenen Hochdruckturbinenkühlung mit vor dem Absperrventil abzweigendem Entnahmeluftstrang zur Hochdruckturbine,

Fig. 3 einen gehäuseseitigen Teillängsschnitt der Niederdruckturbine, die zum Antrieb eines Frontgebläses eines Gasturbinenstrahltriebwerkes vorgesehen ist, und bei der am äußeren Umfang des Gehäuses Luftausblasrohre zur Turbinenlaufschaufelspaltsteuerung vorgesehen sind,

Fig. 4 eine perspektivische Teildarstellung des Niederdruckturbinenaußengehäuses, in der weitere Einzelheiten der Turbinenlaufschaufelspaltsteuereinrichtung verdeutlicht sind,

Fig. 5 ein Entnahmeluftleitungsabschnitt mit an einer Abzweigstelle befindlichem Absperrventil, welches für einen mit der Turbinenlaufschaufelspaltsteuereinrichtung koordienierten Schaltzyklus ausgebildet ist,

Fig. 6 eine zum Ventil nach Fig. 5 gehörige Steuereinheit zwecks zeitlich verzögerter Steuerung des Ventils nach Fig. 5 und über die Druckdifferenz aus Steuerluftdruck ($P_{ACC}$) und Gondel- bzw. Zellendruck ($P_{NACELLE}$) ansprechend,

Fig. 7 ein Entnahmeluftleitungsabschnitt mit in einem vertikal auf das Gehäuse der Niederdruckturbine abgeknickten Leitungsstrang angeordnetem Absperrventil, hier als einfachst ausgeführtes Überdruckventil ausgebildet und aus dem Differenzdruck zwischen dem Verdichterentnahmeluftdruck ($P_{HDV}$) und dem Gehäusegegendruck ($P_{Gehäuse}$) betätigbar, und mit zur Hochdruckturbine geführter Abzweigleitung am Entnahmeluftleitungsabschnitt und

Fig. 8 den Entnahmeluftleitungsabschnitt mit Überdruckventil und Abzweigleitung nach Fig. 7 in der Kombination mit einem der Steuereinheit nach Fig. 6, hier jedoch eine in der Verdichterluftentnahmeleitung, vor dem Überdruckventil befindliche Absperrklappe bedarfsweise zeitlich verzögert öffnend.

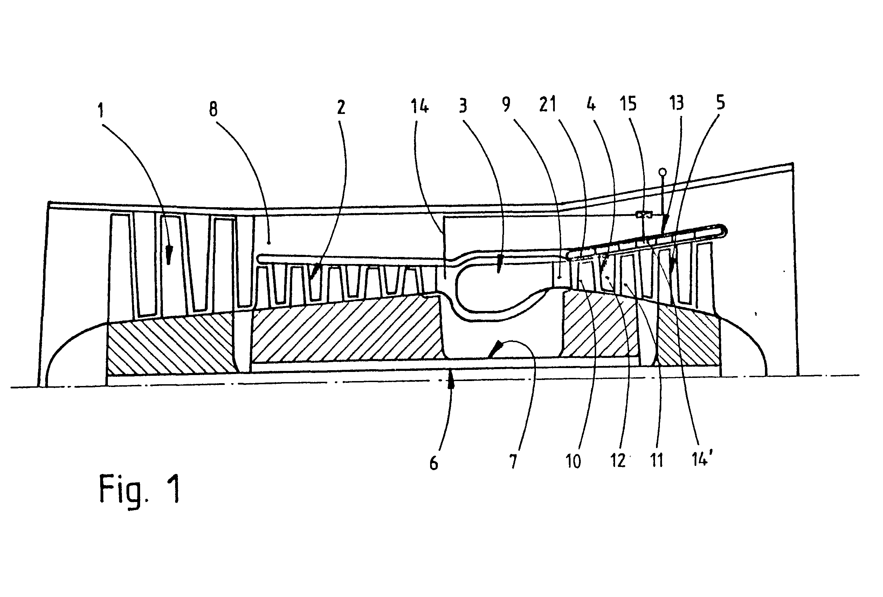

Fig. 1 verkörpert ein für die Anwendung der Erfindung geeignetes Gasturbinenstrahltriebwerk in Zweistrombauweise Dieses Gasturbinenstrahltriebwerk besteht der Reihe nach — von links nach rechts — aus einem Niederdruckverdichter 1, einem Hochdruckverdichter 2, einer Ringbrennkammer 3, einer Hochdruckverdichterantriebsturbine 4, der eine Niederdruckturbine 5 zum Antrieb des Niederdruckverdichters 1 thermodynamisch nachgeschaltet ist. Dabei sind der Niederdruckverdichter 1 mit der Niederdruckturbine 5 über ein gemeinsames inneres Wellensystem 6 miteinander gekoppelt. Beim Hochdruck- oder Gaserzeugerteil sind der Hochdruckverdichter 2 und die zugehörige Verdichterantriebsturbine 4 über ein gemeinsames Wellensystem 7 miteinander gekoppelt. Das Wellensystem 7 ummantelt dabei in koaxialer Bauweise das Innenwellensystem 6. Ein Teil des vom Niederdruckverdichter 1 geförderten Luftstroms (Mantelluftstrom) wird zur Vortriebsschuberzeugung an den Sekundärkanal 8 des Triebwerks gefördert, ein übriger Teil des vom Niederdruckverdichter 1 geförderten Luftstroms gelangt zur Hochdruckturbine 2 des Gaserzeugers. Der aus der Niederdruckturbine 5 entweichende Heißgasstrom wird ebenfalls zur Vortriebsschuberzeugung genutzt.

Normalerweise müssen bei einem derartigen Triebwerk wesentliche Turbinenkomponenten zwecks Beherrschung der Heißgastemperatur gekühlt werden, es wären also beispielsweise die Eintrittsleitschaufeln 9 der Hochdruckturbine 4 kühlbar, ferner beispielsweise die Laufschaufeln 10 und 11, der Hochdruckturbine 4 wie gegebenenfalls aber auch z.B. die Leitschaufeln 12 der zweiten Stufe des Hochdruckverdichters 4. Die für die genannten Kühlungsfälle der Hochdruckturbine 4 zu verwendende Verdichterluft kann an einer oder mehreren geeigneten Stellen aus dem Hochdruckverdichter 2 entnommen werden und über das betreffende innere Rotorsystem dem entsprechenden Verwendungszweck zugeführt werden. Dabei ist es fernerhin auch schon bekannt, die betreffende ringförmige Gehäusestruktur 13 von Hochdruck- und Niederdruck-turbine 4 bzw. 5, wie in Fig. 1 dargestellt, in einezelne Ringräume, z.B. 21 bzw. 14' zu zergliedern.

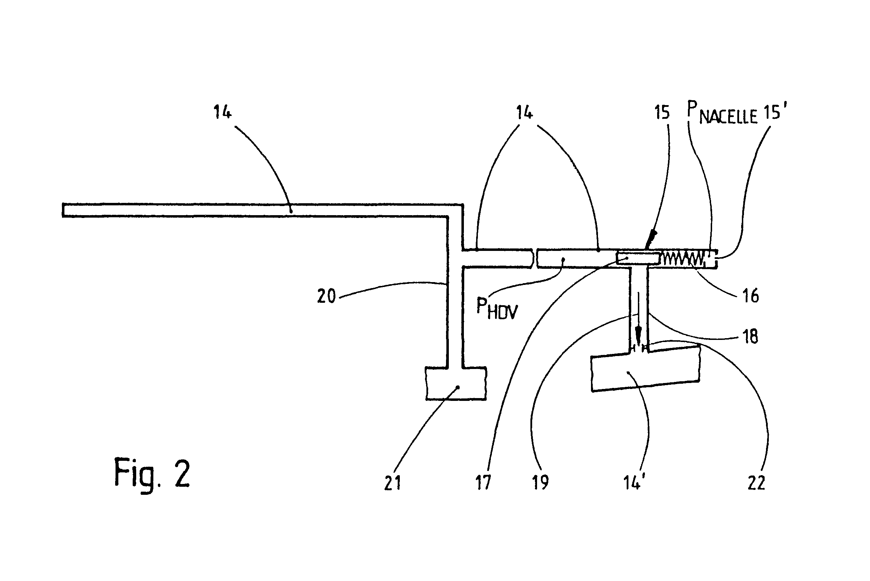

Gemäß Fig. 1 ist eine Verdichterluftentnahmeleitung 14 vorgesehen, die hierbei beispielsweise stromab der letzten Axialverdichterstufe in den betreffenden Verdichterkanl des Hochdruckverdichters 2 einmündet. Auf der anderen Seite mündet diese Entnahmeleitung 14 zwecks betreffender "kritischer" Innengehäuse-, insbesondere Hakenkühlung, in einen Ringraum 14' der erwähnten Gehäusestruktur 13 ein. Demnach können im vorliegenden Fall also sogenannte "kritische" turbineninnengehäuseseitige Strukturbauteile ausschließlich beim Start und anschließender Steigflugphase des Flugzeugs gezielt mittels Verdichterluft beaufschlagbar sein. Hierzu ist in die zuvor genannte Entnahmeleitung 14, vor deren Einmündungsstelle in die Gehäusestruktur 3, ein die Kühlluft steuerndes Absperrventil 15 geschaltet (siehe auch Fig. 2), durch welches die Kühlluftzufuhr erst bei mit Triebwerksbeschleunigung einhergehender Änderung eines vorgegebenen Differenzdruckes zwischen dem auf der einen Seite eines Absperrglieds 17 (Fig. 2) herrschenden Entnahmeluftdruck $P_{HDV}$ und dem auf der anderen Seite des Ventilglieds 17 herrschenden Gondel- bzw. Zellendruck $P_{NACELLE}$ freigegeben, hingegen im Normal- bzw. Reiseflugzustand abgesperrt ist. Bei diesem zuvor besprochenen Triebwerk nach Fig. 1 wäre also auslegungsseitig grundsätzlich davon auszugehen, daß die betreffen empfindlichen Stellen, z.B. die Gehäusehaken der Niederdruckturbine 5, im Reiseflug, in dem das Temperaturniveau des Heißgases vergleichsweise niedrig ist, ohne Kühlung auskommen können. Das angegebene Absperrventil 15 (Fig. 1) tritt also in diesem Fall ausschließlich nur dann in Fuktion, wenn die höchsten Temperaturen raturen auftreten, d.h. also hauptsächlich während des Flugzeugstarts und der anschließenden Steigflugphase.

Fig 2 verkörpert eine gegenüber Fig 1 detaillierter wieder angegebene Ventil-Leitungsanordnung, wobei wiederum die betreffende Verdichterluftentnahmeleitung mit 14 bezeichnet ist. Das auch in Fig. 2

EP 0 192 185 B1

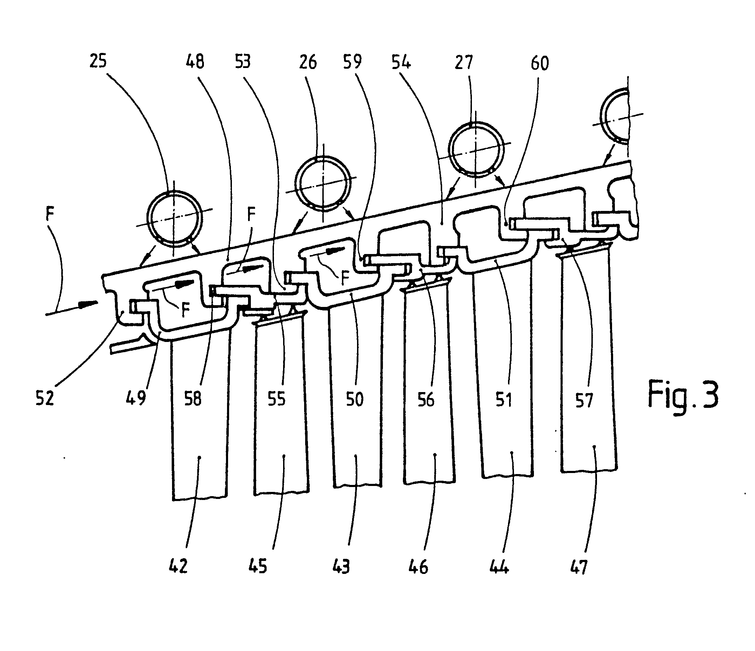

mit 15 bezeichnete Absperrventil beinhaltet in Ausbildung als Überdruckventil ein gegen die Rückstellkraft einer Feder 16 betätigbares Absperrglied 17, welches im vorliegenden Fall beispielsweise in der Art eines Kolbens ausgebildet ist, und demnach innerhalb eines zugeordneten Abschnitts der Entnahmeluftleitung 14 axial gegen die Rückstellkraft der Feder 16 verschiebbar ist. Von der linken Seite der Fig. 2 aus gesehen, wirkt also auf das Absperrglied 17 der Entnahmeluftdruck $P_{HDV}$ ein, während das Absperrglied 17 auf der Federseite dem Gondel- bzw. Zellendruck $P_{NACELLE}$ ausgesetzt ist, also das betreffende Absperrglied 17 vom Entnahmeluftdruck $P_{HDV}$ soweit gegen die Feder 16 verschoben werden kann, daß es den zugeordneten Leitungsstrang 18 vollständig öffnet, wobei dann ausschließlich in dieser " kritischen" Betriebsphase, die als Start- und Steigflugphase zeitlich etwa mit 2 Minuten zu veranschlagen wäre, die Entnahmeluft gemäß Pfeilrichtung 19 in den betreffenden Ringraum 14' abströmt, um damit eine örtlich gezielte Kühlung beispielsweise in Fig. 3 noch näher erläuterter Gehäusehaken einer Niederdruckturbine zu bewerkstelligen. Bei der Anordnung nach Fig. 2 ist der federseitige Raum des Absperrventils 15 über eine Öffnung 15, hier in der Ventilgehäuserückwand, dem Gondel- bzw. Zellendruck $P_{NACELLE}$ ausgesetzt.

Je nach Auslegung des Triebwerks kann es sinnvoll sein, im Zusammenwirken der zuvor beschriebenen Anordnung eine stets vorhandene Gehäuseinnenkühlung vorzusehen, die jedoch stark reduzierbar wäre. Gemäß Fig. 2 kann hierzu Verdichterluft über einen von der Entnahmeluftleitung 14 abzweigenden Leitungsstrang 20 an geeigneter Stelle, stromauf der Niederdruckturbine 5, dem Gehäuseringraum 21 zugeführt werden, der hier im örtlichen Heißgasbereich der Hochdruckturbine 4 liegt und mit mehreren nachfolgenden Ringkanälen fluidisch kommunizieren kann.

Zur Verdeutlichung eines praktischen Anwendungsfalles kann die Feder 16 des Absperrventils 15 derart auf die erforderliche Betriebs- und Ventilschaltfunktion abgestimmt sein, daß z.B. ab einer Druckdifferenz $\triangle P \leq 5{,}5$ bar das Absperrventil 15 geschlossen ist. Z.B. ab $P\triangle 8{,}5 \geq$bar sollte dann das Absperrventil 15 voll offen sein. Da der Abstand in der Druckdifferenz zwischen ADP (Auslegungspunkt des Triebwerks) und T.O. (Start-Steigflugphase) sehr groß ist, ist an das Schaltverhalten des Ventils keine hohe Anforderung zu stellen.

Wie aus Fig. 2 weiter ersichtlich ist, kann in die Entnahmeluftleitung 14, kurz vor deren Einmündungsstelle in den Ringraum 14', ein sogenannter "Restriktor 22" eingebaut sein, der bedarfsweise gegebenenfalls austauschbar ist, und mit dem die Entnahmeluftmenge einstellbar ist.

Abweichend von der zuvor geschilderten zusätzlich vorhandenen, jedoch stark reduzierten Gehäuseinnenkühlung über den Leitungsstrang 20, wäre es durchaus möglich, diesen Leitungsstrang 20 als Hochdruckverdichterentnahmeluftführung zu verwenden, um anderweitige Turbinenkomponenten im Rahmen des üblichen Kühlluftbedarfs beaufschlagen zu können.

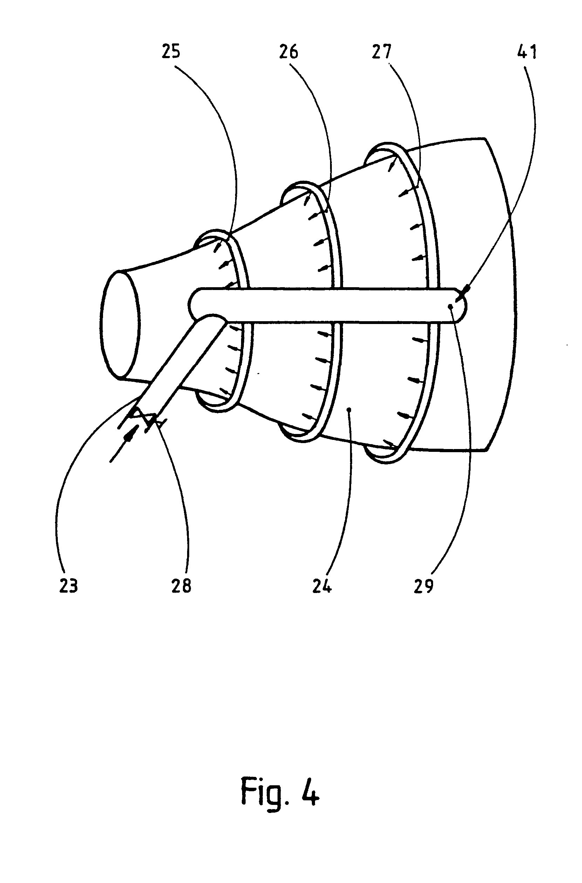

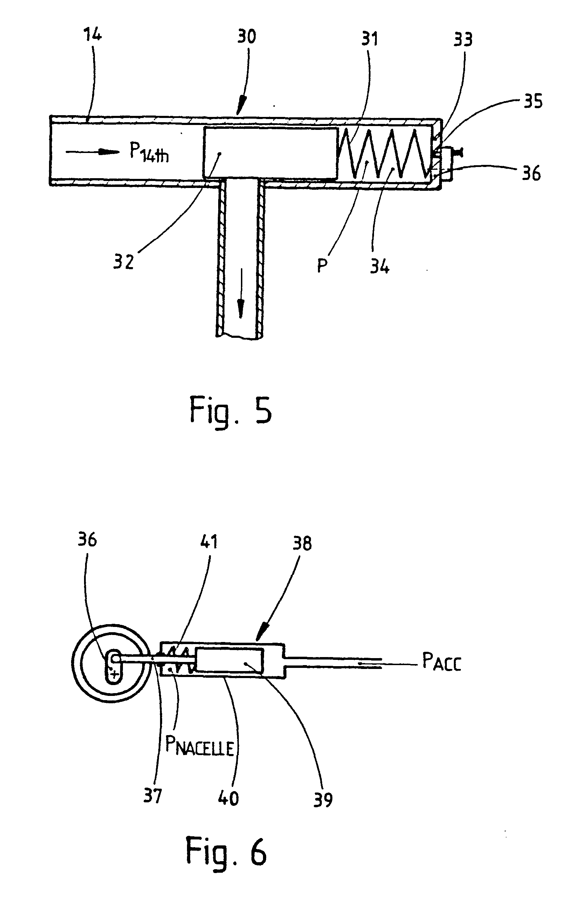

In weiterer Ausgestaltung (Anspruch 2) wird von einem Gasturbinenstrahltriebwerk ausgegangen, mit mindestens einer der Verdichterantriebsturbine des Gaserzeugers aero-thermodynamisch nachgeschalteten Nutzturbine zum Antrieb eines in den äußerern Sekundärkreis fördernden Gebläses (Fan-Triebwerk). Dabei wird ferner von einer an sich bekannten Einrichtung zur Steuerung der Turbinenlaufschaufelspale (Active Clearance Control) ausgegangen, mit der ein vom Gebläseförderstrom über eine entsprechende Zuleitung 23 (Fig. 4) abgezweigter relativ kalter Teilluftstrom auf mehrere, außengehäuseseitig, also um das Turbinenaußengehäuse 24 der Niederdruckturbine herum angeordnete Luftaustrittsrohre 25, 26, 27 verteilt wird; dies soll mittels eines Steuerventils 28 geschehen, und zwar soll das Steuerventil 28 in Abhängigkeit vom Flug- und Triebwerkszustand ein- oder abschaltbar bzw. modulierbar sein. Gemäß Fig. 4 wird also, sofern das Steuerventil 28 mehr oder weniger geöffnet ist, vergleichsweise kalte Gebläseluft über die zuvor genannte Zuleitung 23 zunächst einem Luftverteilerkasten 29 zugeführt, an den die einzelnen Luftaustrittsrohre 25, 26 und 27 angeschlossen sind. Unter Zugrundelegung einer derartigen, an sich bekannten Triebwerkonzeption ist es vorgesehen, daß der Schaltzyklus der gezielten, turbinengehäuseseitigen Strukturbauteilkühlung mit demjenigen der Steuereinrichtung für die Turbinenlaufschaufelspalte (ACC) koordiniert ist. Dabei soll das betreffende Absperrventil 30 (Fig. 5) als Funktion des an geeigneter Stelle entnommenen und zuschaltbaren Steuerluftdrucks aus dem Gebläseteilluftstrom $P_{ACC}$ — siehe Fig. 6 — erst dann öffnen, wenn dieser Druck $P_{ACC}$ größer als der Gondel- oder Zellendruck $P_{NACELLE}$ ist.

Hierzu weist dieses Absperrventil 30 (Fig. 5) wiederum einen gegen die Rückstellkraft einer Feder 31 betätigbares Absperrglied 32 auf, das als Steuerkolben ausgebildet ist.

Dieses Absperrglied 32 soll wiederum innerhalb der zuvor erwähnten Entnahmeluftleitung 14 axial gegen die Rückstellkraft der Feder 31 verschiebbar angeordnet sein. Im Rahmen dieser Ventilauführung nach Fig. 5 und 6 kann demnach die Rückwand 33 des den federseitigen Raum 34 umgrenzenden Ventilgehäuses 14 eine Entlüftungsöffnung 35 aufweisen, die wahlweise mittels eines Schiebers 36 gegen $P_{NACELLE}$ freilegbar oder absperrbar ist. Der zuvor genannte Schieber 36 ist hierzu mit einem Stellgleid 37 einer weiteren Steuereinheit 38 gekoppelt. Diese weitere Steuereinheit 38 besteht aus einem mit dem Stellglied 37 verbundenen Steuerkolben 39, der innerhalb eines zylindrischen Gehäuses 40 gegen die Rückstellkraft einer Feder 41 sowie ferner im Wege des Differenzdruckes aus dem gegen die eine Kolbenseite aufgebrachten Steuerluftdruck ($P_{ACC}$) und dem an der Kolbengegenseite herrschenden Gondel- oder Zellendruck ($P_{NACELLE}$) in Längsrichtung verschiebbar ist.

Zur Funktion der kombinierten Überdruckventil-Steuereinheit im Rahmen der Fig. 5 und 6 sei folgendes vermerkt: Bei der ACC-Luft handelt es sich um verhältnismäßig kalte Fan-Abzapfluft, die von außen auf das Gehäuse geblasen wird, und zwar über den betreffenden Gehäusehaken, wie sie in Fig. 3

5

nachstehend noch näher spezifiziert werden. Der Zweck ist demnach eine Rückkühlung der für die Gehäusedehnung maßgeblichen Strukturen, um eine Reduzierung der Laufschaufelspalte, und damit ein besserer Wirkungsgrad, speziell während des Reiseflugs, zu erzielen. Bei einem bekannten Fan-Triebwerk der genannten Art wird dieser Effekt für den Start-und die Steigflugphase genutzt, d. h., ACC-Luft wird schon in dieser Flugphase von Anfang an zugeschaltet. Dies bewirkt zwar eine spürbare Rückkühlung der Gehäusehaken, ist aber nicht ausreichend, um das kritische Temperaturniveau zu unterschreiten. Eine zusätzliche Kühlung ist also dringend notwendig. Dieses gleichzeitig schon am Anfang der Startphase erfolgende Zuschalten der verhältnismäßig kalten Fan-Abzapfluft hat folgende weitere negative Begleiterscheinung:

Bei der Beschleunigung ist das Ansprechverhalten der Laufschaufeln, hier beispielsweise der Niederdruckturbine, sehr schnell (schnelle Ausdehnung), während das zugehörige Gehäuse aufgrund der größeren Masse erst verzögert nachkommt, bzw. bezüglich der thermischen Dehnung zeitlich "hinterherhinkt". Als Folge davon verringern sich die betreffenden Turbinenlaufschaufelspalte sehr stark bis zu einem Einlaufen im Dichtungsbelag; wird nun, wie vorstehend erwähnt, die ACC-Luft schon vom Beginn der Beschleunigung an zugeschaltet, so wird die Dehnung des Gehäuses noch weiter verzögert, so daß es zu einem verstärkten Dichtungseinlauf kommt, der im geringsten Fall zu einem verhältnismäßig starken Verschleiß der Laufschaufelspitzen bzw. der Laufschaufelspitzendichtungen auf der einen Seite, wie aber auch der betreffenden Einlaufbeläge am Gehäuse auf der anderen Seite führt. Im Wege der nach Patentanspruch 2 angegebenen Schaltzykluskombination, deren praktische Durchführung durch das Überdruckventilkonzept nebst Steuereinheit im Rahmen der Fig. 5 und 6 möglich ist, kann also das entsprechende Absperr ventil 30 mit zeitlicher Verzögerung derart zugeschaltet werden, daß es zu dem genannten extrem starken Dichtungseinlauf in der Start- und Steigflugphase nicht kommt, zugleich andererseits aber eine gezielte Kühlung der kritischen Bauteile sichergestellt wird, was wiederum zu Leistungseinsparungen über den weitaus größten Teil der Flugmission führt.

Die Start-Steigflugbedingung (T.O.-Bedingung) für den zeitlich verzögerten Schaltzyklus im Rahmen der Fig. 5 und 6 läßt sich für einen praktischen Anwendungsfall wie folgt definieren:

$$\text{Zeit: } 0 < t < 40 \text{ sec.: } P = P_{14th}$$

$$P_{ACC} = P_{NACELLE}, \text{ d. h.,}$$
Entlüftungsbohrung 35 zu.

$$t \geq 40 \text{ sec.: } P = P_{NACELLE}$$

$$P_{ACC} > P_{NACELLE}, \text{ d. h.,}$$
Steuereinheit 38 öffnet Entlüftungsbohrung 35.

Darin ist P der im federseitigen Raum 34 herrschende Druck, wenn die Entlüftungsbohrung 35 verschlossen ist. $P_{14th}$ ist repräsentativ für einen geeigneten Hochdruckverdichterentnahmeluftdruck, hier die 14. Stufe des Hochdruckverdichters. $P_{ACC}$ repäsentiert den in Verbindung mit Anspruch 2 erwähnten Steuerluftdruck aus dem Gebläseluftstrom, der an geeigneter Stelle 41 (Fig. 4) aus dem Luftverteilerkasten 29 entnommen wird. ACC bedeutet: Turbinenlaufschaufelspaltsteuereinrichtung, hergeleitet aus: Active Clearence Control. $P_{NACELLE}$ repäsentiert den Gondel- oder Zellendruck.

Es hat sich nun gezeigt, daß von der Temperaturbelastung her die mindestens ersten vier Gehäusehaken als besonders "kritisch" zu bezeichnen sind, wobei es sich nach Fig. 3 z.B. um die Gehäusehaken 52, 58, 53 und 59 handelt. Diese zuletzt genannten Gehäusehaken sind besonders "kritisch", da sie mehr oder weniger ungeschützt die Heißgastemperatur vom Hauptstrom spüren. Wegen der über die Turbinenstufen abnehmenden Heißgastemperatur wären dann also z.B. die nachfolgenden Haken 54 und 60 nichmehr als "kritisch" zu bezeichnen; da, wie eingangs bereits schon erwähnt, die höchsten Temperaturen während der Starts und der anschließenden Steigflugphase auftreten, ist demnach nur während dieser Zeit von etwa 2 Minuten eine Belüftung der kritischen Haken 52, 58, 53, 59 (Fig. 3) notwendig. Im Reiseflug (Cruise = ADP) kann im allgemeinen das Temperaturniveau des Heißgases so niedrig veranschlagt werden, daß die genannten Gehäusehaken ohne zusätzliche Belüftung auskommen.

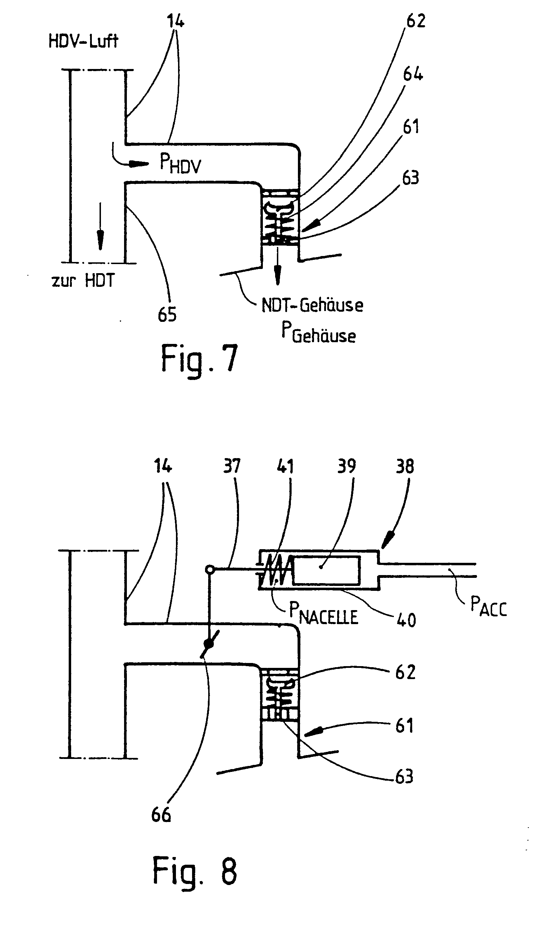

Die Anordnung nach Fig. 7 veranschaulicht ein aufgebautes Absperrventil 61 als Überdruckventil, welches hier innerhalb eines vertikal abgeknickten Stranges der Entnahmeluftleitung 14 angeordnet ist. Ein derartiges Überdruckventil wird in der Fachsprache auch als "Penny-Valve" bezeichnet, welches als Absperrglied 62 einen Ventilteller sowie einen Innenventilschaft 63 aufweist, wobei der vertikal abgeknickte Leitungsstrang gleichzeitig das Ventilgehäuse ausbildet. Der Ventilteller als Absperrglied 62 ist gegen die Rückstellkraft einer Feder 64 betätigbar. Demnach ist dieses Absperrventil 61 also bei Änderung eines vorgegebenen Differenzdruckes zwischen dem Entnahmeluftdruck $P_{HDV}$ auf der einen Seite und dem Gehäusegegendruck $P_{Gehäuse}$ auf der anderern Seite betätigbar und zwar so, daß das Ventil im Normal- bzw. Reiseflugzustand geschlossen ist, während es ausschließlich beim Start und anschließender Steigflugphase geöffnet ist.

Die Verdichterluftentnahmeleitung 14 ist stromaufwärtig vor der zuvorbesprochenen "kritischen" Ventilsitzposition mit einer Abzweigleitung 65 verbunden, um eine übrige Entnahmeluftmenge ihrem entsprechenden Verwendungszweck, z.B. zur Kühlung der Hochdruckturbine (HDT), zuzuführen.

Fig. 8 verkörpert eine Ventilvariante im Sinne der Fig. 7 in Kombination mit einer Steuereinheit, ähnlich der Fig. 6, wobei jedoch, abweichend von der zuvor genannten Ventilsteuereinheit, das Stellglied 37 '' 'ig. ) der weiteren Steuereinheit 38 eine Ventilklappe 66 steuert, mit der die Entnahmeluftleitung 14, vc. dem Überdruckventil 61, wahlweise absperrbar oder freilegbar ist, und zwar im Sinne einer zeitlich verzögerten kombinierten Steuerung, wie sie sinngemäß mit den Ausführungsbeispielen nach den Fig. 5 und 6 realisiert werden soll sowie im Rahmen des Patentanspruchs 2, ausgehend von einem dort erwähnten Gasturbinenstrahltriebwerk als Gebläsetriebwerk, welches eine Einrichtung zur Steuerung der Turbinenlaufschaufelspalte (ACC) aufweist. Im übrigen sind für die Steuereinheit 38 nach Fig. 8, soweit gleiche oder ähnliche Bauteile der Fig. 6 sinngemäß angewendet werden, die gleichen Bezugszeichen nach Fig. 6 zugrunde gelegt.

In Fig. 7 und 8 bedeuten: HDV = Hochdruckverdichter, HDT = Hochdruckturbine und HDV-Luft = Hochdruck-Verdichter-Entnahmeluft.

Im Zusammenhang mit der zuvor teilweise schon in die Be trachtung mit einbezogenen Fig. 3 wäre der Vollständigkeit halber noch zu erwähnen, daß darin die Leitschaufeln dreier aufeinanderfolgender Turbinenstufen der Reihe nach mit 42, 43 und 44, die zugehörigen Laufschaufeln mit 45, 46, 47 bezeichnet sind. Jeweils auf der linken Seite sind die den Leitschaufeln 42, 43 und 44 zugehörigen Fußsegmente 49, 50, 51 an den Haken 52, 53, 54 des Turbinengehäuses 48 aufgehängt. Jeweils auf der rechten Seite sind die Fußsegmente 49, 50, 51 an die Laufschaufeldeckbanddichtspitzen ummantelnden Dichtungssegmentträgern 55, 56, 57 aufgehängt; die letztere sind einerseits an den zuvor erwähnten Gehäusehaken 58, 59, 60 aufgehängt; andererseits zwischen den Enden der Gehäusehaken, z.B. 53, 54 sowie den angrenzenden Abschnitten der Fußsegmente, z.B. 50, 51, eingeklemmt.

Der Kühlluftfluß für die gesteuerte, gezielt "kritische" Gehäuseinnen- bzw. Hakenkühlung (Haken 52, 48, 53, 59) ist durch Pfeile F verdeutlicht. Abweichend können auch mehrere mit entsprechender Ventilsteuerung zusammenwirkende Entnahmeluftleitungsenden jeweils einzeln und örtlich, nach Bedarf verteilt, in die entsprechenden Innengehäusepartien einmünden.

**Patentansprüche**

1. Gasturbinenstrahltriebwerk für Flugzeuge, bei dem eine oder mehrere Turbinen, insbesondere deren innengehäuseseitige Strukturbauteile, mittels an geeigneter Stelle aus dem Kreisprozeß entnommener Verdichterluft örtlich gezielt kühlbar sind, und bei dem in mindestens einer in Richtung auf im Betrieb kritische Strukturbauteile geführten Verdichterentnahmeluftleitung (14), vor deren Einmündungsstelle in ein Turbinengehäuse, ein die Kühlluft steuerndes Absperrventil (15; 61) angeordnet ist, dadurch gekennzeichnet, daß das Absperrventil (15; 61) ein unter Freigabe eines Durchströmquerschnittes für die Kühlluftzufuhr zur Einmündungsstelle in einem Gehäuse angeordnetes, durch Differenzdruck betätigtes Absperrglied (32; 62) aufweist, welches durch Differenzdruck zwischen einem auf dessen einer Seite herrschenden Gondel- bzw. Zellen- oder dem Turbinengehäusedruck ($P_{NACELLE}$; $P_{GEHÄUSE}$) und dem auf dessen anderer Seite herrschenden Entnahmeluftdruck ($P_{HDV}$) derart betätigt ist, daß die Kühlluftzufuhr erst bei mit Triebwerksbeschleunigung einhergehender Änderung des Differenzdruckes freigegeben ist.

2. Triebwerk nach Anspruch 1, mit mindestens einer der Verdichterantriebsturbine des Gaserzeugers aero-thermodynamisch nachgeschalteten Nutzturbine zum Antrieb eines in einen äußeren bzw. in den Sekundärkreis des Triebwerks fördernden Gebläses, wobei eine Steuereinrichtung für die Turbinenlaufschaufelspalte (ACC) vorgesehen ist, bei der ein vom Gebläseförderstrom abgezweigter, relativ kalter Teilluftstrom auf mehrere turbinenaußengehäuseseitig angeordnete Luftaustrittsrohre (25, 26, 27) verteilt wird und ferner mittels eines Steuerventils (28) in Abhängigkeit vom Flug- und Triebwerkszustand zu- oder abschaltbar oder modulierbar ist, dadurch gekennzeichnet, daß der Schaltzyklus der gezielten, turbinengehäuseseitigen Strukturbauteilkühlung über das Absperrventil (30) mit demjenigen der Steuereinrichtung für die Turbinenlaufschaufelspalte (ACC) koordiniert ist, indem das Absperrventil (30) als Funktion des an geeigneter Stelle entnommenen und zuschaltbaren Steuerluftdrucks ($P_{ACC}$) (Fig. 5) aus dem Gebläseteilluftstrom erst öffnet, wenn dieser Druck ($P_{ACC}$) größer als der Gondel- bzw. Zellendruck ($P_{NACELLE}$) ist.

3. Triebwerk nach Anspruch 1, dadurch gekennzeichnet, daß das Absperrventil (15) als Überdruckventil ausgebildet ist, bei dem der eine Rückstellfeder (16) für das Absperrglied (17) enthaltende Gehäuseraum über eine Öffnung (15') in der Ventilgehäusewand dem Gondel- bzw. Zellendruck ($P_{NACELLE}$) ausgesetzt ist.

4. Triebwerk nach Anspruch 2, dadurch gekennzeichnet, daß das Absperrventil (30) eine Rückstellfeder (31) enthält und die Rückwand (33) des den federseitigen Raum (34) umgrenzenden Ventilgehäuses (14) eine Entlüftungsöffnung (35) aufweist, die wahlweise mittels eines Schiebers (36) freilegbar oder absperrbar ist, der hierzu mit einem Stellglied (37) einer weiteren Steuereinheit (38) gekoppelt ist, die aus

## EP 0 192 185 B1

einem mit dem Stellglied (37) verbundenen Steuerkolben (39) besteht, der innerhalb eines zylindrischen Gehäuses (40) gegen die Rückstellkraft einer Feder (41) sowie im Wege des Differenzdruckes aus dem gegen die eine Kolbenseite aufgebrachten Steuerluftdruck ($P_{ACC}$) und dem an der Kolbengegenseite herrschenden Gondel- bzw. Zellendruck ($P_{NACELLE}$) in Längsrichtung verschiebbar ist.

5. Triebwerk nach Anspruch 4, dadurch gekennzeichnet, daß das Stellglied (37) der weiteren Steuereinheit (38) eine Ventilklappe (66) steuert, mit der die Entnahmeluftleitung (14) — vor dem Überdruckventil (61) — wahlweise absperrbar oder freilegbar ist.

6. Triebwerk nach einem oder mehreren der Ansprüche 1 bis 5, dadurch gekennzeichnet, daß die bei den maßgeblichen Flug- und Triebwerkszuständen als "kritisch" zu bezeichnenden, einer zusätzlichen Kühlung zu unterwerfenden Turbinengehäusestrukturbauteile, wie Gehäusehaken (52, 58, 53, 59) oder dergleichen, Bestandteile der als Gebläseantriebsturbine fungierenden Niederdruckturbine des Strahltriebwerks sind.

7. Triebwerk nach einem oder mehreren der Ansprüche 1 bis 6, dadurch gekennzeichnet, daß ein von der Verdichterluftentnahmeleitung (14) — stromaufwärts vor dem Absperrventil (15) — abzweigender Leitungsstrang (20) entweder zur Bereitstellung einer stets vorhandenen, stark reduzierten Kühlluftmenge für das bzw. die Turbineninnengehäusestrukturen oder (65) zur Bereitstellung einer anderweitigen, betriebsnotwendigen Kühlluftmenge, z.B. zur Kühlung der Hochdruckturbine bzw. deren Radscheiben und Schaufeln, vorgesehen ist.

## Revendications

1. Moteur à réaction à turbine à gaz pour avions, dans lequel une ou plusieurs turbines, en particulier leurs éléments de construction structurels situés du côté du carter intérieur sont susceptibles d'être refroidis de manière déterminée localement par de l'air du compresseur prélevé en un emplacement approprié dans le cycle de fonctionnement, moteur dans lequel est disposée une soupape d'arrêt (15; 61) commandant l'air de refroidissement, installée dans au moins une conduite d'air de prélèvement (14) du compresseur qui est dirigée vers les éléments de construction structurels critiques en fonctionnement, en amont de son point d'embouchure dans un carter de turbine, caractérisé en ce que la soupape d'arrêt (15; 61) présente un organe d'isolation (32; 62) disposé dans un carter, libérant une section transversale de passage d'écoulement servant à l'amenée d'air de refroidissement au point d'embouchure dans un carter, et actionné par une pression différentielle, organe dont l'actionnement, par la pression différentielle existante entre la pression de nacelle respectivement de cellule, ou la pression de carter de turbine ($P_{NACELLE}$; $P_{CARTER}$) qui régne sur un de ses côtés et la pression d'air de prélèvement ($P_{HDV}$) qui régne sur son autre côté, est tel que l'amenée d'air de refroidissement est libérée à la suite d'une modification de la pression de la pression différentielle due à l'accélération du moteur à réaction.

2. Moteur à réaction selon la revendication 1, comportant au moins une turbine utilisatrice placée, dans le cycle aéro-thermodynamique, en aval de la turbine d'entraînement de compresseur du générateur de gaz, pour l'entraînement d'une soufflante refoulant dans un circuit extérieur, respectivement dans le circuit secondaire du moteur à réaction, un dispositif de commande de l'interstice d'aubes rotoriques de la turbine du dispositif (ACC) étant prévu, dans lequel un courant d'air partiel relativement froid, dérivé du courant de refoulement de la soufflante, est réparti entre plusieurs tubes de sortie d'air (25, 26, 27) disposés du côté du carter extérieur de la turbine et étant, en outre, susceptible d'être mis en ou hors circuit, ou modulé, au moyen d'une soupape de commande (28), en fonction des conditions de vol et du moteur, caractérisé en ce que le cycle de connexion du refroidissement déterminé des éléments de construction structurels qui sont situés du côté du carter de la turbine est coordonné, par l'intermédiaire de la soupape d'arrêt (30), avec celui du dispositif de commande de l'interstice d'aubes rotoriques de la turbine du dispositif (ACC), dans la mesure où la soupape d'isolement (30) s'ouvre en fonction de la pression d'air de commande ($P_{ACC}$) (figure 5), provenant du courant d'air partiel de la soufflante et prélevée à l'emplacement approprié et susceptible d'être connectée, ceci à la suite d'une montée de cette pression ($P_{ACC}$) à une valeur supérieure à la pression de la nacelle ou de la cellule ($P_{NACELLE}$).

3. Moteur à réaction selon la revendication 1, caractérisé en ce que la soupape d'isolement (15) est réalisée sous la forme d'une soupape de surpression, dans laquelle l'espace de carter contenant un ressort de rappel (16) servant à l'organe d'isolement (17) est exposé à la pression de la nacelle ou de la cellule ($P_{NACELLE}$), par l'intermédiaire d'un orifice (15') ménagé dans la paroi de carter de la soupape.

4. Moteur à réaction selon la revendication 2, caractérisé en ce que la soupape d'isolation (30) contient un ressort de rappel (31) et que la paroi arrière (33) du carter de soupape (14) délimitant le pourtour de l'espace (34) situé côté ressort présente un orifice d'aération (35) qui peut être, à volonté, libéré ou isolé au moyen d'un tiroir (36) qui est, à cet effet, accouplé à un organe de réglage (37) d'une unité de commande (38) supplémentaire composé d'un piston de commande (39), relié à l'organe de réglage (37) et déplaçable en direction longitudinale à l'intérieur d'un carter cylindrique (40), contre la force de rappel d'un ressort (41), ainsi qu'au moyen de la pression différentielle provenant de la pression d'air de commande ($P_{ACC}$) appliquée sur une face du piston et de la pression de la nacelle ou de la cellule ($P_{NACELLE}$) régnant sur la face opposée du piston.

5. Moteur à réaction selon la revendication 4, caractérisé en ce que l'organe de commande (37) de l'unité de commande (38) supplémentaire commande un clapet de soupape (66) à l'aide duquel la conduite d'air de prélèvement (14) peut être obturée ou dégagée à volonté, en amont de la soupape de surpression (61).

6. Moteur à réaction selon une ou plusieurs des revendications 1 à 5, caractérisé en ce que les éléments de construction structurels du carter de turbine désignés comme étant "critiques" lors des conditions déterminantes de vol et du moteur et qui doivent être soumis à un refroidissement supplémentaire, comme les crochets de carter (52, 58, 53, 59) ou analogues, sont des constituants de la turbine basse pression du moteur à réaction, qui font fonction de turbine d'entraînement de la soufflante.

7. Moteur à réaction selon une ou plusieurs des revendications 1 à 6, caractérisé en ce qu'un tronçon de conduite (20) dérivé de la conduite de prélèvement d'air (14) de compresseur, en amont de la soupape d'isolement (15), est prévu, soit pour fournir une quantité d'air de refroidissement, qui existe toujours et est fortement réduite, pour la ou les structures de carter intérieur de la turbine (65) pour fournir une quantité d'air de refroidissement d'une autre valeur, nécessaire au fonctionnement, par exemple pour le refroidissement de la turbine à haute pression ou de ses disques de roue et de ses aubes.

## Claims

1. A gas turbine jet propulsion unit for aircraft wherein one or a plurality of turbines and particularly their structural components which are on the inner housing side, are capable of enjoying locally controlled cooling at some suitable location from compressor air drawn from the cycle, and wherein, in at least one line (14) for withdrawing compressor air and which is guided in the direction of structural components which are critical during operation, a shut-off valve (15; 61) for controlling the cooling air being disposed upstream of the point at which the line (14) discharges into a turbine housing, characterised in that the shut-off valve (15; 61) comprises a shut-off member (32; 62) actuated by differential pressure and disposed in a housing, releasing a through-flow cross-section for supplying cooling air to the point of entry, the said shut-off member (32; 62) being so actuated by differential pressure between a nacelle or housing or turbine housing pressure ($P_{NACELLE}$; $P_{HOUSING}$) obtaining on one side and the withdrawal air pressure ($P_{HDV}$) obtaining on the other side, so that cooling air supply is released only if there is a variation in differential pressure associated with an acceleration of the propulsion unit.

2. A propulsion unit according to Claim 1, comprising, aerothermodynamically downstream of the compressor drive turbine of the gas generator, at least one utility turbine for driving a blower which delivers into an outer or into the secondary circuit of the propulsion unit, a control device being provided for the turbine blade gap (ACC), in which a partial relatively cold air current branched off the flow delivered by the blower is distributed over a plurality of air outlet pipes (25, 26, 27) disposed on the outside of the turbine housing and which can furthermore be cut in or switched off or modulated by means of a control valve (28) as a function of the flight and propulsion unit situation, characterised in that the operating cycle for the controlled cooling of the structural components at the turbine housing end is, via the shut-off valve (30), co-ordinated with that of the turbine blade gap (ACC) control unit, in that as a function of the control air pressure ($P_{ACC}$) (Fig. 5) which is drawn off from the partial air flow from the blower at some suitable location and can then be applied, the shut-off valve only opens when this pressure ($P_{ACC}$) is greater than the nacelle or housing pressure ($P_{NACELLE}$).

3. A propulsion unit according to Claim 1, characterised in that the shut-off valve (15) is constructed as an over-pressure valve, wherein the space in the housing which contains a restoring spring (16) for the shut-off member (17) is, via an aperture (15°) in the wall of the valve housing, exposed to the pressure in the nacelle or housing ($P_{NACELLE}$).

4. A propulsion unit according to Claim 2, characterised in that the shut-off valve (30) contains a restoring spring (31) and in that the rear wall (33) of the valve housing (14) defining the space (34) on the spring side comprises a venting aperture which can be exposed or shut-off optionally by means of a slide valve (36) which, for the purpose, is coupled to a positioning member (37) of a further control unit (38) which consists of a control piston (39) connected to the positioning member (37) and which is longitudinally displaceable inside the cylindrical housing (40) against the restoring force of a spring (41) and in accordance with the pressure differential between the control air pressure ($P_{ACC}$) applied against one side of the piston and the nacelle or housing pressure ($P_{NACELLE}$) prevailing on the opposite side of the piston.

5. A propulsion unit according to Claim 4, characterised in that the positioning member (37) of the further control unit (38) controls a valve flap (66) with which it is possible optionally to shut off or open the air draw-off line (14) upstream of the over-pressure valve (61).

6. A propulsion unit according to one or more of Claims 1 to 5, characterised in that the components of the turbine housing structure such as the housing hooks (52, 58, 53, 59) or the like, which have to be termed "critical" in the relevant flight and propulsion unit situations, and which have to be exposed to additional cooling, are constituent parts of the low-pressure turbines of the jet propulsion unit which function as lower drive turbines.

7. A propulsion unit according to one or more of Claims 1 to 6, characterised in that a pipeline (20) which is branched off the compressor air draw-off line (14) — upstream of the shut-off valve (15) — is provided in order to keep constantly available a greatly reduced quantity of cooling air for the turbine interior housing structures or (65) in order to keep available any other amount of cooling air which may be needed during operation, e.g. for cooling the high-pressure turbines or their wheel discs and blades.

Fig. 1

1    8    2    14    3    9    21    4    15    13    5

6    7    10    12    11    14'

EP 0 192 185 B1

Fig. 2

Fig. 3

25  26  27  41

23  28  24  29

## Fig. 4

Fig. 5

Fig. 6

HDV-Luft

14

62

64

61

63

$P_{HDV}$

zur HDT

65

NDT-Gehäuse
$P_{Gehäuse}$

# Fig. 7

14    37    41    39    38

$P_{ACC}$

$P_{NACELLE}$    40

62

61

63

66

# Fig. 8

6